(19) Europäisches Patentamt
European Patent Office
Office européen des brevets

(11) **EP 3 399 619 B1**

(12) **EUROPEAN PATENT SPECIFICATION**

(45) Date of publication and mention
of the grant of the patent:
**08.06.2022 Bulletin 2022/23**

(21) Application number: **18169172.6**

(22) Date of filing: **25.04.2018**

(51) International Patent Classification (IPC):
**H02J 3/32** *(2006.01)*    *H02J 3/38* *(2006.01)*
*H02J 7/00* *(2006.01)*

(52) Cooperative Patent Classification (CPC):
**H02J 3/32;** H02J 3/381; H02J 7/0013; H02J 7/0018;
H02J 7/0048; H02J 2300/20

(54) **STORAGE BATTERY SYSTEM, METHOD OF CONTROLLING SAME, AND POWER STABILIZATION SYSTEM**

SPEICHERBATTERIESYSTEM, VERFAHREN ZUR STEUERUNG DAVON UND ENERGIESTABILISIERUNGSSYSTEM

SYSTÈME DE BATTERIE DE STOCKAGE, SON PROCÉDÉ DE COMMANDE ET SYSTÈME DE STABILISATION DE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2017 JP 2017087818**

(43) Date of publication of application:
**07.11.2018 Bulletin 2018/45**

(73) Proprietor: **Hitachi Power Solutions Co., Ltd.**
**Hitachi-shi, Ibaraki 317-0073 (JP)**

(72) Inventors:
• **GOTOH, Kengo**
**Tokyo, 100-8280 (JP)**
• **TANAKA, Kazuhide**
**Ibaraki, 317-0073 (JP)**
• **MATSUO, Takashi**
**Ibaraki, 317-0073 (JP)**
• **KAWAZOE, Hironari**
**Tokyo, 100-8280 (JP)**
• **ITO, Tomomichi**
**Tokyo, 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
WO-A1-2015/198630    CN-B- 102 157 985
JP-A- 2006 287 998    JP-A- 2016 059 134
US-A1- 2008 224 541    US-A1- 2015 019 149
US-A1- 2015 022 140    US-A1- 2016 013 670

EP 3 399 619 B1

## Description

### TECHNICAL FIELD

The present invention relates to a storage battery system that inhibits variation in the electric power of a power system, a method of controlling the storage battery system, and a power stabilization system using the storage battery system.

### RELATED ART

With increasing use of renewable energy in power systems, there is a possibility of the voltage and the frequency of the power system being unstable. For this reason, systems for inhibiting variations in the electrical power (power stabilization systems) have been studied in recent years. Power stabilization systems generally utilize a storage battery system and/or a flywheel.

As a power stabilization system utilizing storage batteries, a system using storage batteries having different characteristics, such as a lead storage battery, a lithium-ion battery, and a sodium-sulfur battery (NaS battery) is known.

Japanese Patent Publication No. 2016-59134 (hereinafter referred to as Patent Literature 1) describes a storage battery system including different types of storage batteries and means for distributing a charge/discharge signal to the storage batteries using a moving average operation, to inhibit variations in the power. The storage battery system of Patent Literature 1 includes control circuitry that inhibits variations in the power of a power system on the basis of system power computed by a power computing unit and voltages and currents detected by a plurality of power detectors. The control circuitry provides the amplitudes and frequencies of charging/discharging operation patterns to the storage batteries depending on the amplitude of the system power computed by the power computing unit.

In US 2008/224541 A1 a power control method for secondary batteries is described. The method includes the steps of dividing the secondary batteries into a constant power control group and a demand responsive group and distributing predetermined constant input/output power out of the power to be input and output provided to all the secondary batteries in order to compensate fluctuation of output power of the power generator.

WO 2015/198630 A1 discloses a command value calculation unit that calculates first and second power command values on the basis of the measurement result of a power measurement unit at a power supply line. A command value determination unit receives the first and second power command values from the command value calculation unit and determines whether these power command values are a charge command value or a discharge command value. If the command value determination unit determines that one of the first and second power command values is the charge command value and the other is the discharge command value, a charging and discharging unit control unit stops any one of the charging and discharging units and operates only the other one.

Problems to be Solved by the Invention

In the storage battery system described in Patent Literature 1, the different types of storage batteries are charged or discharged depending on their characteristics by dividing the charging or discharging power into a long cycle component and a short cycle component. In this storage battery system, however, the charging/discharging directions of the different types of storage batteries may not match. When the charging/discharging directions of the storage batteries do not match, unnecessary charge and/or discharge operations are performed to interchange power between the storage batteries, resulting in a power loss and an increase in cycle numbers of the storage batteries. In some cases, this can cause failures of the storage batteries.

An object of the present invention is to provide a storage battery system capable of inhibiting variations in the system power and improving the life span of storage batteries.

Solution to Problems

According to the independent apparatus claim 1 of the present invention for solving the above-described problems, a storage battery system connected to a power system includes: power conversion devices; a control system that controls the power conversion devices; at least two types of storage batteries to be charged and discharged respectively via the power conversion devices; distribution means that receives an initial charge or discharge signal from the power system and divides the initial charge or discharge signal into a plurality of charge and/or discharge signals transmitted respectively for the at least two types of the storage batteries; a polarity determination unit that determines whether polarities of the plurality of charge and/or discharge signals match; and redistribution means that sets at least one of the plurality of charge and/or discharge signals to zero when the polarity determination unit determines the polarities of the plurality of charge and/or discharge signals as not matching. The distribution means is configured to divide the initial charge or discharge signal using a filter having a variable time constant, wherein the filter is part of the distributions means (115).

The independent method claim 9 of the present invention for solving the above-described problems provides a method for controlling a storage battery system connected to a power system and carrying out charging and discharging operations on a plurality of storage batteries so as to inhibit variations in the power of the power system. The method includes steps of: detecting a current and a voltage of the power system; generating an initial charge or discharge signal based on which charging or discharging of the plurality of storage batteries is to be performed, on the basis of the detected current and voltage; dividing the initial charge or discharge signal into a plurality of charge and/or discharge signals transmitted respectively for the plurality of storage batteries; determining whether polarities of the plurality of charge and/or discharge signals match; processing the plurality of charge and/or discharge signals by setting at least one of the plurality of charge and/or discharge signals to zero when the polarities of the plurality of charge and/or discharge signals are determined as not matching; and charging or discharging the plurality of storage batteries on the basis of the plurality of charge and/or discharge signals resulted from the processing. The distribution means divides the initial charge or discharge signal using a filter having a variable time constant.

## EFFECTS OF THE INVENTION

The present invention allows inhibiting variations in the power of a power system and improving life spans of storage batteries.

## BRIEF DESCRIPTION OF THE DRAWINGS

FIG. 1 is a diagram illustrating the configuration of a power stabilization system according to a first embodiment.
FIG. 2 is a diagram illustrating the configuration of charge and/or discharge signal redistribution means according to the first embodiment.
FIG. 3 is a diagram illustrating charge and/or discharge signals after distribution by the power stabilization system of the first embodiment.
FIG. 4 is a diagram illustrating changes in state of charge (SOC) of storage batteries calculated on the basis of distributed charge and/or discharge signals in the first embodiment.
FIG. 5 is a diagram illustrating the charge and/or discharge signals after redistribution by the power stabilization system of the first embodiment.
FIG. 6 is a diagram illustrating changes in SOC of storage batteries calculated on the basis of the charge and/or discharge signals after the redistribution in the first embodiment.
FIG. 7 is a diagram illustrating the configuration of a power stabilization system according to a first modification of the first embodiment.
FIG. 8 is a diagram illustrating the configuration of a power stabilization system according to a second modification of the first embodiment.
FIG. 9 is a diagram illustrating the configuration of a power stabilization system according to a second embodiment.
FIG. 10 is a diagram illustrating the configuration of a power stabilization system according to the present invention.

## EMBODIMENTS FOR CARRYING OUT THE INVENTION

There is an increasing demand on large-capacity storage battery systems for the purposes of stabilizing power systems. Storage batteries generally used as large-capacity storage batteries are currently lead storage batteries. Lead storage batteries have low energy efficiency and low energy density and thus require regular refill charging, which requires a large amount of time for maintenance. In addition, during charging/discharging the lead storage batteries in the maintenance, the storage batteries cannot be charged or discharged to stabilize the power system.

Meanwhile, lithium-ion batteries and NaS batteries have high energy density and thus have been increasingly used as large-capacity storage batteries advantageous for maintenance, to substitute for lead storage batteries. Lithium-ion batteries are suitable for charging/discharging with a high load and have a small amount of self-discharging, and thus are capable of providing power rapidly. However, a long term operation of lithium-ion storage batteries may cause the lithium-ion storage batteries to transit to a high-temperature state, resulting in reduction in the life span of the lithium-ion storage batteries. In contrast, NaS batteries have a large battery capacity to operate for a long term with a large current and have high energy density, and thus are capable of providing power over a long cycle. However, NaS batteries cannot adapt to rapid energy variations.

To deal with the variation in the voltage of a power system, studies have been conducted on combinations of different types of batteries having the above-described advantages and disadvantages. For example, as the variations of the voltage of a power system have short cycle components and long cycle components, the short cycle components may be absorbed by lithium-ion batteries capable of providing power rapidly and the long cycle components may be absorbed by NaS batteries capable of long term operations. In this way, a storage battery system having cost advantages over a single storage battery can be constructed.

In the field of hybrid storage battery systems, in which different types of batteries are combined, studies have been conducted on algorithms for allocating power burdens to the different types of storage batteries, for the purposes of stabilizing power systems and improving the reliability of the power systems. A first order lag filter is known as a conventional method of power burden allocation. However, when the polarities (positive or negative signs) of the power burden signals allocated to the batteries possibly do not match due to a lag time, the charge/discharge directions of the batteries do not match. When this occurs, power for charging may possibly be unnecessarily inputted from an external power supply, and/or concentration of power to a single battery may possibly occur, which results in a short life span of that battery. Other power burden allocation methods have similar problems. If these problems are resolved, power burden sharing of different types of batteries is improved, which, for example, contributes to increasing the life span of the batteries.

To solve the problems described above, the inventors of the present application invented a storage battery system connected to a power system and including power conversion devices, a control system controlling the power conversion devices, and different types of storage batteries to be charged or discharged via the power conversion devices. The storage battery system divides a charge/discharge signal given from the power system into a different types of charge/discharge signals based on which the different types of storage batteries are charged or discharged, determines as to whether the polarities of the different types of charge/discharge signals match, and, when the polarities of the different types of charge/discharge signals do not match, re-divides the different types of charge/discharge signals.

When the polarities of the different types of charge/discharge signals match, the different types of storage batteries are charged or discharged in accordance with the different types of charge/discharge signals. In contrast, when the polarities of the different types of charge/discharge signals do not match, at least one of the different types of charge/discharge signals is set to zero and the different types of storage batteries are charged or discharged in accordance with the resulted different types of charge/discharge signals. As a result, unnecessary charging or discharging of the at least two types of storage batteries are inhibited.

Hereinafter, an embodiment of the present invention will now be described with reference to the accompanying drawings. It should be noted that the same constituent elements in the drawings are given the same reference signs. In the following, a first aspect useful for understanding the present invention is named as "first embodiment" and a second aspect useful for understanding the present invention is named as "second embodiment", said embodiments are not covered by the appended claims.

First Embodiment

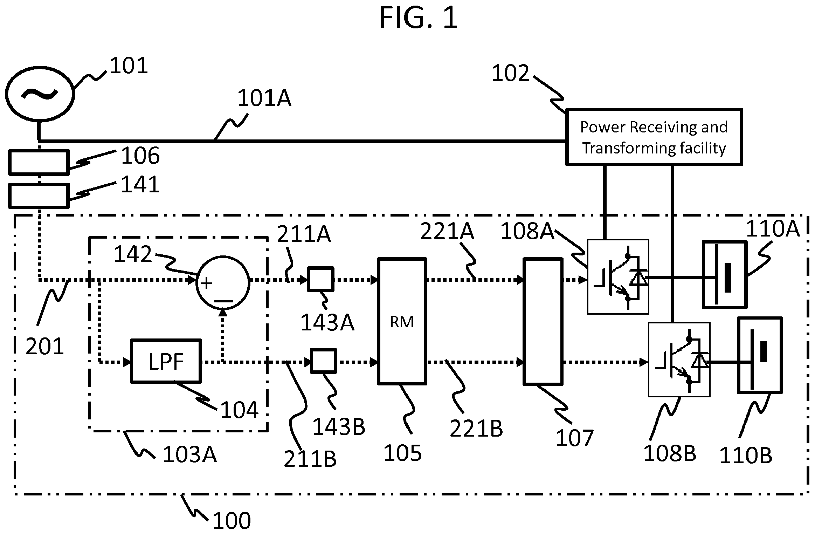

FIG. 1 is a diagram illustrating the configuration of a power stabilization system according to a first embodiment. A power system 101 is connected via a system bus 101A to a power receiving and transforming facility 102. A storage battery system 100 performs charging and discharging via the power receiving and transforming facility 102 in order to stabilize the power system 101. The system bus 101A is provided with a current and voltage detector 106 that detects the current and the voltage of the power system 101. On the basis of the voltage and current detected by the current and voltage detector 106, a power computing unit 141 computes a charge/discharge signal 201 representing power to be charged into or discharged from the storage battery system 100 and feeds the charge charge/discharge signal 201 to the storage battery system 100.

The storage battery system 100 of the first embodiment shown in FIG. 1 includes: a first storage battery 110A and a second storage battery 110B; a charge/discharge signal distribution means 103A that divides the charge/discharge signal 201 computed by the power computing unit 141 into a charge/discharge signal low-frequency component 211B and a charge/discharge signal high-frequency component 211A, to distribute the charge/discharge signal 201 for the storage batteries 110A and 110B; charge/discharge signal detectors 143A and 143B that detect the distributed charge/discharge signals; charge/discharge signal redistribution means (RM) 105 that carries out redistribution by re-dividing the charge/discharge signals detected by the charge/discharge signal detectors 143A and 143B into a charge/discharge signal high-frequency component redistribution signal 221A and a charge/discharge signal low-frequency component redistribution signal 221B, to redistribute the charge/discharge signals distributed by the charge/discharge signal distribution means 103 for the storage batteries 110A and 110B; a power conversion device controller 107 that generates signals that cause power conversion devices to output power according to the charge/discharge signal high-frequency component redistribution signal 221A and the charge/discharge signal low-frequency component redistribution signal 221B outputted by the charge/discharge signal redistribution means 105; a power conversion device 108A that charges power into or discharges power from the first storage battery 110A according to the signal generated by the power conversion device controller 107; and a power conversion device 108B that charges power into or discharges power from the second storage battery 110B according to the signal generated by the power conversion device controller 107. The power conversion devices 108A and 108B are connected to the power receiving and transforming facility 102 and supply/receive power to/from the power system 101 via the system bus 101A.

The charge/discharge signal distribution means 103A includes a low-pass filter 104 and a computing unit 142 that computes a difference between the charge/discharge signal 201 and the charge/discharge signal low-frequency component 211B computed by the low-pass filter 104. The low-pass filter 104 passes signals with frequencies lower than a certain frequency and attenuates signals with frequencies higher than a cut-off frequency, to extract signals with frequency components lower than the certain frequency. The first storage battery 110A performs short-cycle (high-frequency) charge/discharge operations, and the second storage battery 110B performs long-cycle (low-frequency) charge/discharge operations.

The first storage battery 110A that performs short-cycle charge/discharge operations is constituted by, for example, a lithium-ion battery. The second storage battery 110B that performs long-cycle charge/discharge operations is constituted by, for example, a NaS battery or lead storage battery.

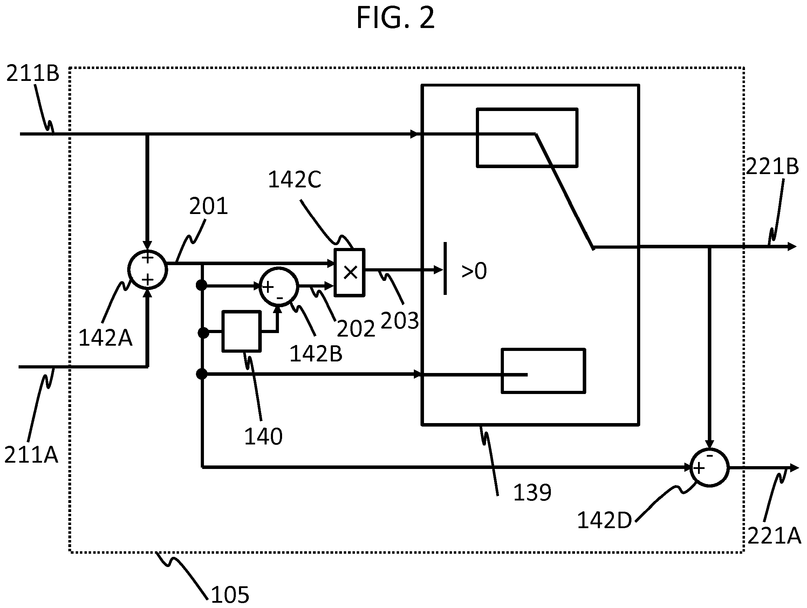

FIG. 2 shows the internal structure of the charge/discharge signal redistribution means 105. The charge/discharge signal redistribution means 105 includes the following elements:

(1) A computing unit 142A that restores and outputs the charge/discharge signal 201 (P(n)) by adding up the charge/discharge signal low-frequency component 211B and the charge/discharge signal high-frequency component 211A.
(2) A charge/discharge signal delay device 140 that takes the charge/discharge signal P(n) and outputs the previous charge/discharge signal P(n-1).
(3) A computing unit 142B that subtracts the delayed charge/discharge signal P(n-1) from the current charge/discharge signal P(n), and outputs the result of the subtraction, i.e., P(n)-P(n-1), as a charge/discharge signal variation 202.
(4) A computing unit 142C that multiplies the charge/discharge signal 201 by the charge/discharge signal variation 202 and outputs the result of the multiplication as a charge/discharge signal redistribution determination signal 203.
(5) A switch 139 that selects between the charge/discharge signal low-frequency component 211B and the restored charge/discharge signal 201 on the basis of the polarity of the charge/discharge signal redistribution determination signal 203. The switch 139 outputs the charge/discharge signal low-frequency component 211B when the polarity of the charge/discharge signal redistribution determination signal 203 is positive, and outputs the charge/discharge signal 201 when the polarity of the charge/discharge signal redistribution determination signal 203 is negative, as the charge/discharge signal low-frequency component redistribution signal 221B.
(6) A computing unit 142D that subtracts the charge/discharge signal low-frequency component redistribution signal 221B from the charge/discharge signal 201 and outputs the result of the subtraction as the charge/discharge signal high-frequency component redistribution signal 221A.

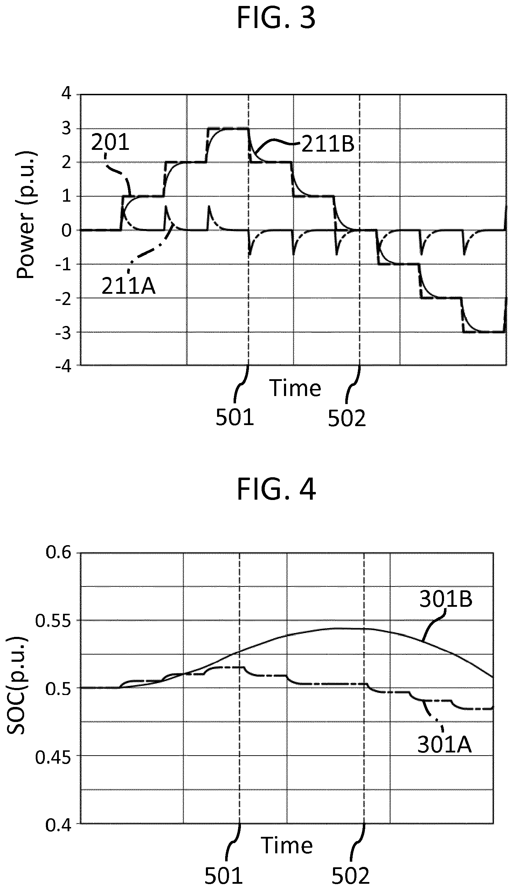

FIG. 3 illustrates a pulse-shaped waveform of the charge/discharge signal 201 as well as the waveforms of the charge/discharge signal high-frequency component 211A and the charge/discharge signal low-frequency component 211B, which are computed by the charge/discharge signal distribution means 103A.

The pulse-shaped waveform of the charge/discharge signal 201 illustrated in FIG. 3 rises from a value of zero, increases until a time 501, and thereafter falls down to a value of zero at a time 502. When this pulse-shaped waveform of the charge/discharge signal 201 is inputted to the charge/discharge signal distribution means 103A, the charge/discharge signal 201 is divided into the charge/discharge signal high-frequency component 211A and the charge/discharge signal low-frequency component 211B as shown in FIG. 3.

The value of an (n+1)-th sample of the charge/discharge signal low-frequency component 211B, denoted by $PL_{out}(n+1)$, is represented by formula (1):

$$PL_{out}(n+1) = PL_{out}(n) + \frac{dt}{T + dt}\left(P_{in}(n+1) - PL_{out}(n)\right) \qquad (1)$$

where $dt$ is a sampling interval, $T$ is a time constant, $P_{in}(n+1)$ is the value of an (n+1)-th sample of the charge/discharge signal 201, and $PL_{out}(n)$ is the n-th sample of the charge/discharge signal low-frequency component 211B. The time constant $T$ in formula (1) is represented by formula (2):

$$T = \frac{1}{2\pi f} \qquad (2)$$

where *f* is a cut-off frequency.

The charge/discharge signal low-frequency component 211B and the charge/discharge signal high-frequency component 211A divided from the charge/discharge signal 201 possibly have opposite polarities at certain time points. In the example shown in FIG. 3, in the period from time 501 to time 502, there are time periods in which the charge/discharge signal 201 and the charge/discharge signal low-frequency component 211B are positive, whereas the charge/discharge signal high-frequency component 211A is negative.

FIG. 4 illustrates change in state of charge (SOC) 301A of the first storage battery 110A and change in SOC 301B of the second storage battery 110B which are estimated under the assumption that charging/discharging is carried out on the basis of the charge/discharge signal low-frequency component 211B and the charge/discharge signal high-frequency component 211A shown in FIG. 3 without the charge/discharge signal redistribution. When the charge/discharge signals shown in FIG. 3 is input, as the polarities of the charge/discharge signals do not match during the time period from time 501 to time 502, the SOC of the second storage battery 110B increases whereas the SOC of the first storage battery 110A decreases or remains constant as shown in FIG. 4. When storage batteries have opposite charge/discharge directions as described above, an interchange of power occurs between the storage batteries, resulting in a power loss and an increase in the number of charge-discharge cycles of the storage batteries.

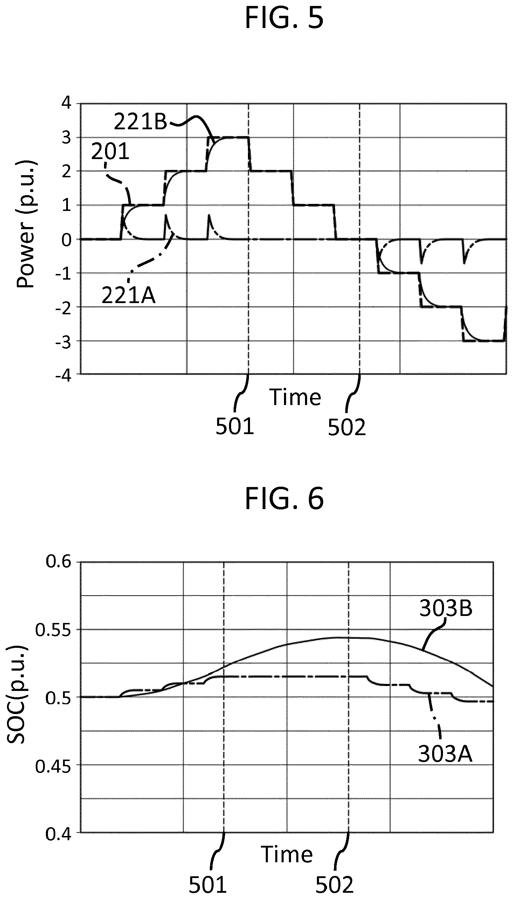

FIG. 5 illustrates the charge/discharge signals that have undergone the charge/discharge signal redistribution by the charge/discharge signal redistribution means 105 of the storage battery system 100 of the first embodiment. FIG. 5 illustrates (i) the waveform of the charge/discharge signal 201, which is identical to that shown in FIG. 3, (ii) the waveform of the charge/discharge signal low-frequency component redistribution signal 221B, i.e., a redistributed, low-frequency component of the charge/discharge signal 201, and (iii) the waveform of the charge/discharge signal high-frequency component redistribution signal 221A, i.e., a redistributed, high-frequency component of the charge/discharge signal 201. As shown in FIG. 5, during the time period in which the charge/discharge signal 201 and the charge/discharge signal low-frequency component redistribution signal 221B take positive values, the charge/discharge signal high-frequency component redistribution signal 221A takes positive values or a value of zero. This is because, during the time period from time 501 to time 502, the charge/discharge signal 201 is positive and is selected by the switch 139 shown in FIG. 2 to be outputted as the charge/discharge signal low-frequency component redistribution signal 221B, according to the charge/discharge signal redistribution determination signal 203 taking a negative value. During the time period from time 501 to time 502, as the charge/discharge signal low-frequency component redistribution signal 221B takes the same value as that of the charge/discharge signal 201, the charge/discharge signal high-frequency component redistribution signal 221A takes a value of zero.

FIG. 6 illustrates change in SOC 303A of the first storage battery 110A and change in SOC 303B of the second storage battery 110B which are estimated by calculation on the basis of the charge/discharge signal low-frequency component redistribution signal 221B and the charge/discharge signal high-frequency component redistribution signal 221A illustrated in FIG. 5. When the charge/discharge signal low-frequency component redistribution signal 221B and the charge/discharge signal high-frequency component redistribution signal 221A illustrated in FIG. 5 are inputted, as their polarities match, the charge/discharge directions of the storage batteries 110A and 110B are never opposite to each other. Specifically, when the SOC 303B of the second storage battery 110B increases, the SOC 303A of the first storage battery 110A remains constant or increases, whereas, when the SOC 303B of the second storage battery 110B decreases, the SOC 303A of the storage battery 110A remains constant or decreases.

As a result, a mismatch of charge/discharge directions of SOC of the storage batteries 110A and 110B is prevented. This inhibits unnecessary charging or discharging of the storage batteries 110A and 110B, and thus decreases the cycle numbers of the storage batteries 110A and 110B, increasing their life spans. Also as a result, an increase in the difference in the SOC between the different types of storage batteries 110A and 110B is inhibited compared to the case in which the different types of storage batteries 110A and 110B take opposite charge-discharge directions.

It should be noted that, although the charge/discharge signal 201 has been described to be an input having a pulse-shaped waveform as shown in FIG. 3, a similar effect can be obtained even when the input has a waveform other than a pulse-shaped waveform. Moreover, although the charge/discharge signal redistribution means 105 has been described as dealing with two types of charge/discharge signals for two types of storage batteries as shown in FIG. 2, the storage battery system 100 may be configured to include other filters to divide the charge/discharge signal 201 into three of more charge/discharge signals to charge/discharge three or more storage batteries, such that the charge/discharge directions of all the storage batteries match. A similar effect can be obtained even in such a configuration.

Moreover, although the storage batteries 110A and 110B each have been described as a single battery as shown in FIG. 1, each of the storage batteries 110A and 110B can be an assembled battery in which a plurality of batteries are connected in parallel or series. A similar effect can be obtained even in such a configuration.

First Modification of First Embodiment

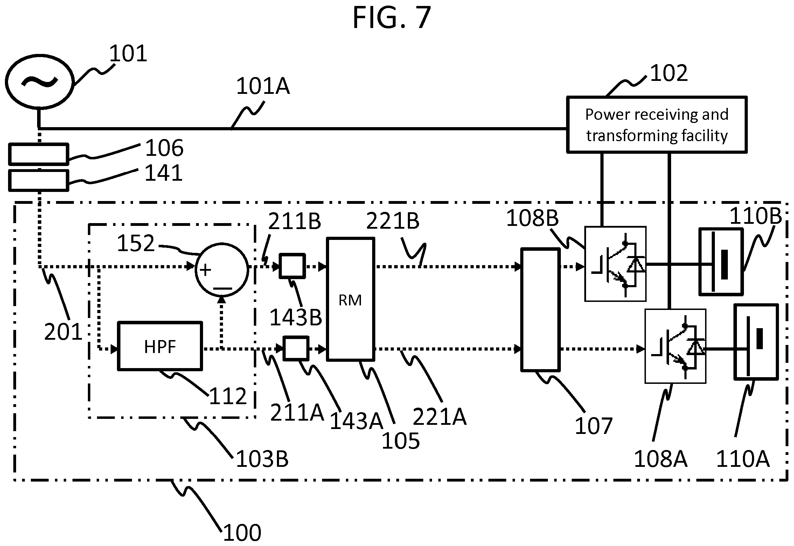

FIG. 7 shows the configuration of a first modification of the first embodiment. The charge/discharge signal distribution means 103A of the first embodiment is constructed using the low-pass filter 104 and the computing unit 142. As shown in FIG. 7, the first modification of the first embodiment includes a charge/discharge signal distribution means 103B constructed using a high-pass filter 112 and a computing unit 152, in place of the charge/discharge signal distribution means 103A. This configuration also provides the same effect as provided in the first embodiment. The high-pass filter 112 passes signals with frequencies higher than a certain frequency and attenuates signals with frequencies lower than a cut-off frequency, to extract signals with frequency components higher than the certain frequency.

The value of an (n+1)-th sample of the charge/discharge signal high-frequency component 211A, denoted by $PH_{out}(n+1)$, is represented by formula (3):

$$PH_{out}(n + 1) = \frac{T}{T + dt} \left( P_{in}(n + 1) - P_{in}(n) + PH_{out}(n) \right) \qquad (3)$$

where $dt$ is a sampling interval, $T$ is a time constant, $P_{in}(n+1)$ and $P_{in}(n)$ are respectively the values of (n+1)-th and n-th samples of the charge/discharge signal 201, and $PH_{out}(n)$ is the value of an n-th sample of the charge/discharge signal high-frequency component 211A. The time constant $T$ in formula (3) is represented by formula (4):

$$T = \frac{1}{2\pi f} \qquad (4)$$

where $f$ is a cut-off frequency f.

The storage battery system shown in FIG. 7 provides the same effect as provided in the first embodiment shown in FIG. 1.

Second Modification of First Embodiment

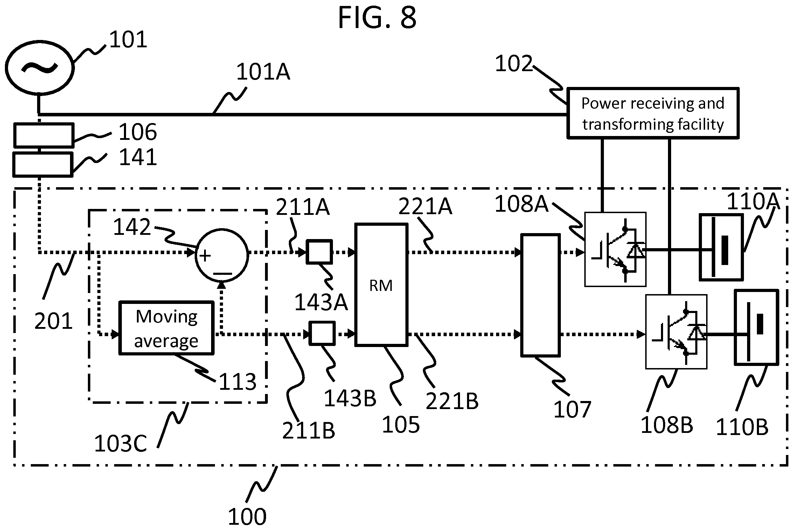

FIG. 8 shows the configuration of a second modification of the first embodiment. The charge/discharge signal distribution means 103A of the first embodiment is constructed using the low-pass filter 104 and the computing unit 142. The second modification of the first embodiment includes a charge/discharge signal distribution means 103C constructed using a moving average computing unit 113 in place of the low-pass filter 104, in place of the charge/discharge signal distribution means 103A. The moving average computing unit 113 is capable of extracting low-frequency components like a low-pass filter. The configuration shown in FIG. 8 also provides the same effect as provided in the first embodiment.

Assuming that the charge/discharge signal 201 is a time-series signal: P(t1), P(t2), and P(t3), the chronological variation of the time-series signal can be reduced by calculating P'(t2) by averaging P(t1) and P(t2), P'(t3) by averaging P(t2) and P(t3), and so on.

Second Embodiment

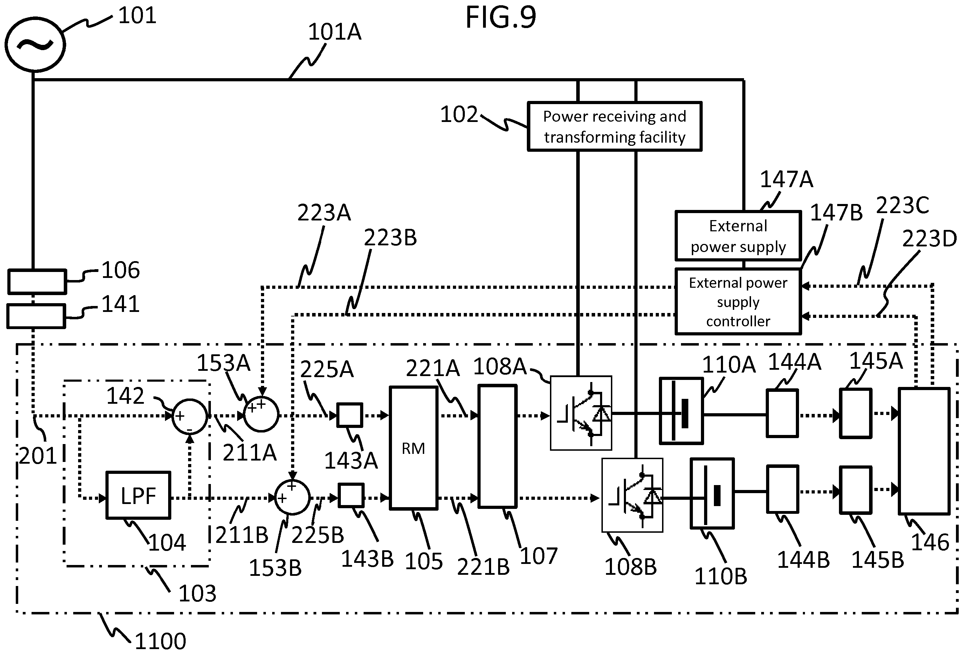

FIG. 9 illustrates a power stabilization system provided with an external power supply according to a second embodiment. The storage battery system of the second embodiment computes charge/discharge signals on the basis of control on the external power supply, on the basis of received signals. In the following description, constituent elements that are the same as or analogous to those of the first embodiment will be given the same name or number, and duplicative descriptions will be omitted. The power stabilization system according to the second embodiment includes, in addition to the constituent elements of the first embodiment: an external power supply 147A connected to the power system 101; and an external power supply controller 147B that controls the external power supply 147A, and includes a storage battery system 1100 in place of the storage battery system 100. The storage battery system 1100 includes, in addition to the constituent elements of the storage battery system 100, computing units 153A and 153B to reflect additional charge/discharge signals 223A and 223B, which are generated by the external power supply controller 147B, to the storage battery system 1100.

The computing unit 153A receives the additional charge/discharge signal 223A and adds it to the charge/discharge signal high-frequency component 211A, to compute a charge/discharge signal 225A. The computing unit 153B receives the additional charge/discharge signal 223B and adds it to the charge/discharge signal low-frequency component 211B, to compute a charge/discharge signal 225B.

As shown in FIG. 9, the storage battery system 1100 further includes storage battery power detectors 144A and 144B, SOC computing units 145A and 145B, and an external power supply control command generator 146. The storage battery power detectors 144A and 144B are respectively connected to the storage batteries 110A and 110B to detect the power thereof. The values of the detected power of the storage batteries 110A and 110B are inputted into the SOC computing units 145A and 145B. Each of the SOC computing units 145A and 145B computes a time-series of SOC, SOC(n), of the corresponding storage battery according to formula (5):

$$SOC(n) = SOC(n-1) - \int \frac{P \times \eta}{WB} \mathrm{dt} \qquad (5)$$

where P is charging/discharging power, $\eta$ is charging/discharging efficiency, *WB* is storage battery capacity, *SOC(n)* is the SOC at an n-th sample, and *SOC(n-1)* is the SOC at an (n-1)-th sample.

Each of the SOC computing units 145A and 145B outputs the computed SOC(n) to the external power supply control command generator 146. The external power supply control command generator 146 generates power request signals 223C and 223D and outputs them to the external power supply controller 147B. The external power supply controller 147B controls the external power supply 147A connected thereto on the basis of the power request signals 223C and 223D.

Moreover, the external power supply controller 147B outputs the additional charge/discharge signals 223A and 223B. The charge/discharge signal 225A, which is a sum of the additional charge/discharge signal 223A and the charge/discharge signal high-frequency component 211A, and the charge/discharge signal 225B, which is a sum of the additional charge/discharge signal 223B and the charge/discharge signal low-frequency component 211B, are fed via the charge/discharge signal detectors 143A and 143B to the charge/discharge signal redistribution means 105 to be redistributed in the same manner as in the first embodiment.

For example, when the SOC(n) of either storage battery reaches a lower limit, the external power supply control command generator 146 generates the power request signals 223C and 223D to cause the external power supply controller 147B to increase the power generation amount of the external power supply 147A and to generate the additional charge/discharge signals 223A and 223B to be fed to the computing units 153A and 153B to increase the SOC of the storage battery. On the other hand, when the SOC(n) of either storage battery reaches an upper limit, the external power supply control command generator 146 generates the power request signals 223C and 223D to cause the external power supply controller 147B to inhibit the power generation amount of the external power supply 147A and to generate the additional charge/discharge signals 223A and 223B to be fed to the computing units 153A and 153B to decrease the SOC of the storage battery. As a result, the storage battery system 1100 is controlled so that SOC of each storage battery does not exceed the lower and upper limits of the battery.

The additional charge/discharge signals 223A and 223B are respectively added to the charge/discharge signal high-frequency component 211A and the charge/discharge signal low-frequency component 211B, which are created from the charge/discharge signal 201 by the charge/discharge signal distribution means 103. The charge/discharge signal redistribution means 105 determines the polarities of the charge/discharge signals resulted in the additions, and creates the charge/discharge signal high-frequency component redistribution signal 221A and the charge/discharge signal low-frequency component redistribution signal 221B, in the same manner as in the first embodiment.

Examples of the external power supply 147A include gas engines and power generators.

As the additional charge/discharge signals 223A and 223B generated by the external power supply controller 147B have dependency on the SOC of the storage batteries 108A and 108B, the polarities of the additional charge/discharge signals 223A and 223B may possibly not match.

However, as the storage battery system 1100 of the second embodiment includes the charge/discharge signal redistribution means 105 by which the charge/discharge signal low-frequency component redistribution signal 221B and the charge/discharge signal high-frequency component redistribution signal 221A are processed so that they have the same polarity. Thus, the charge-discharge directions of the storage batteries 108A and 108B match. As a result, the cycle numbers of the storage batteries 108A and 108B are reduced.

The second embodiment contributes to improving the life span of the storage batteries 110A and 110B and stabilizing the power system 101 in cooperation with the external power supply 147A.

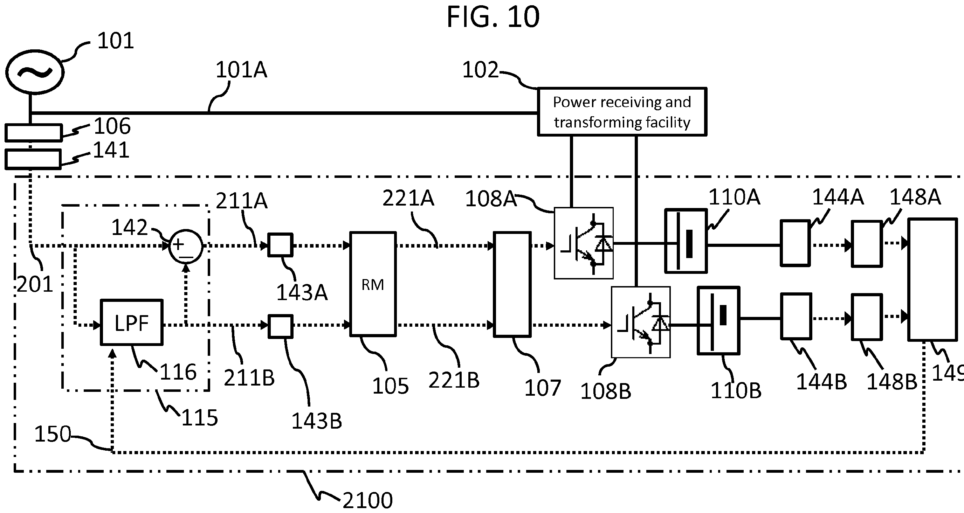

FIG. 10 illustrates the configuration of the present invention. In the following description, constituent elements that are the same as or analogous to those of the first embodiment will be given the same name or number, and duplicative descriptions will be omitted. The power stabilization system according to the third embodiment includes storage battery system 2100 in place of the storage battery system of the first embodiment 100. The storage battery system 2100 includes, in addition to the constituent elements of the first embodiment, storage battery power detectors 144A and 144B, charge/discharge cycle number computing units 148A and 148B, and a filter time constant command generator 149, and includes a charge/discharge signal variable distribution means 115 in place of the charge/discharge signal distribution means 103A. The charge/discharge signal variable distribution means 115 differs from the charge/discharge signal distribution means 103A in that the former includes a low-pass filter 116 whose time constant, a variable time constant 150, can be changed, in place of the low-pass filter 104 of the first embodiment.

The storage batteries 110A and 110B are respectively connected to the storage battery power detectors 144A and 144B. The storage battery power detector 144A computes the power of the storage battery 110A. The charge/discharge cycle number computing unit 148A computes a cycle number of the storage battery 110A on the basis of the power computed by the storage battery power detector 144A. The storage battery power detector 144B computes the power of the storage battery 110B. The charge/discharge cycle number computing unit 148B computes a cycle number of the storage battery 110B on the basis of the power computed by the storage battery power detector 144B. The filter time constant command generator 149 generates a time constant on the basis of the computed cycle numbers, which time constant may vary depending on the computed cycle numbers, and sets the time constant to the low-pass filter 116 as the variable time constant 150 thereof.

In the present invention, the cycle numbers are computed on the basis of discharged power. The cycle number is given by formula (6):

$$cycle\ number = \frac{amount\ of\ discharged\ power}{rated\ electric\ energy \times depth\ of\ discharge} \quad (6)$$

where the *rated electric energy* and the *depth of discharge* are constants specific to a battery.

For example, when the time constant of the filter is small, the charge/discharge signal low-frequency component 211B increases in accordance with formula (1). When variations in a charge/discharge signal for a storage battery are large and the resulting discharged power increases, the cycle number of the storage battery increases in accordance with formula (6). In this case, the life span of the storage battery may possibly be reduced. The filter time constant command generator 149 can increase the variable time constant 150 so as to reduce the cycle numbers and thereby increase the life span of the storage batteries 110A and 110B.

Even with the charge/discharge signal variable distribution means 115 having the variable time constant 150, the charge/discharge signal low-frequency component redistribution signal 221B and the charge/discharge signal high-frequency component redistribution signal 221A are computed by the charge/discharge signal redistribution means 105 so as to have the same polarity, which inhibits unnecessary charging or discharging between the different types of storage batteries.

It should be noted that, although the present invention has been described as using the low-pass filter 116, a high-pass filter with variable time constant or a moving average filter with variable time constant may be used to obtain the same effect.

**Claims**

1. A storage battery system (100) connected to a power system (101), comprising:

    power conversion devices (108A, 108B);
    a control system (107) that is configured to control the power conversion devices (108A, 108B);
    at least two types of storage batteries (110A, 110B) to be charged and discharged respectively via the power conversion devices (108A, 108B);
    distribution means (103A) that are configured to receive an initial charge or discharge signal (201) from the power system (101) and divides the initial charge or discharge signal (201) into a plurality of charge and/or discharge signals (211A, 211B) transmitted respectively for the at least two types of the storage batteries (110A, 110B);

    **characterized in** further comprising

    a polarity determination unit that is configured to determine whether polarities of the plurality of charge and/or discharge signals (211A, 211B) match; and
    redistribution means (105) that are configured to set at least one of the plurality of charge and/or discharge signals (211A, 211B) to zero when the polarity determination unit determines the polarities of the plurality of charge and/or discharge signals (211A, 211B) as not matching,
    wherein the distribution means (115) is configured to divide the initial charge or discharge signal (201) using a filter (116) having a variable time constant, wherein the filter (116) is part of the distributions means (115).

**2.** The storage battery system (100) according to claim 1,

wherein the distribution means (103A) comprises a low-pass filter (104) that is configured to extract a low frequency component from the initial charge or
discharge signal, a high-pass filter (112) that is configured to extract a high frequency component from the initial charge or discharge signal, or a moving average filter (113) that is configured to extract a low frequency component from the initial charge or discharge signal.

**3.** The storage battery system (1100) according to claim 1,

wherein the plurality of charge and/or discharge signals are a first plurality of charge and/or discharge signals, wherein the storage battery system (1100) further comprises, for each of the at least two types of storage batteries (110A, 110B):

a storage battery power detection unit (144A, 144B) that is configured to compute an amount of discharged power of the storage battery; and
an SOC computing unit (145A, 145B) that is configured to compute a state of charge of the storage battery,

wherein the storage battery system (1100) is configured to transmit the state of charge of each of the at least two type of storage batteries (110A, 110B) to external power supply control means (147B) connected to the power system (101),
the storage battery system (1100) is configured to receive, from the external power supply control means (147B), a second plurality of charge and/or discharge signals (223A, 223B) generated respectively for the at least two types of storage batteries (110A, 110B) by the external power supply control means (147B), and
the storage battery system (1100) is configured to add, for each of the at least two types of storage batteries (110A, 110B), one of the second plurality of charge and/or discharge signals (223A, 223B) for the storage battery to one of the first plurality of charge and/or discharge signals (211A, 211B) for the storage battery.

**4.** The storage battery system (2100) according to claim 1,

wherein the storage battery system (2100) further comprises, for each of the at least two types of storage batteries (110A, 110B):

a storage battery power detection unit (144A, 144B) that is configured to compute an amount of discharged power of the storage battery; and
an SOC computing unit (148A, 148B) that is configured to compute a state of charge of the storage battery,

wherein the storage battery system (2100) further comprises a time constant command generator (149) that is configured to determine a value of the variable time constant on the basis of the state of charge or a cycle number of each of the at least two types of storage batteries.

**5.** The storage battery system (100) according to claim 1,
wherein at least one of the at least two types of the storage batteries (110A, 110B) is an assembled battery constituted by a plurality of single batteries.

**6.** A power stabilization system connected to a power system (101) and carrying out charging and discharging operations, the power stabilization system comprising:

a storage battery system (100) according to claim 1;
a current and voltage detector (106) that is configured to detect the current and voltage of the power system (101); and
and power computing unit (141) that is configured to compute the initial charge or discharge signal (201) representing power to be charged into or discharged from the storage battery system (100) on the basis of the current and voltage detected by the current and voltage detector (106).

**7.** The power stabilization system according to claim 6,

wherein the plurality of charge and/or discharge signals (211A, 211B) are a first plurality of charge and/or discharge signals,
wherein the power stabilization system further comprises:

an external power supply (147A) that is configured to supply power to the power system (101); and
an external power supply controller (147B) that is configured to control the external power supply (147A) and output a second plurality of charge and/or discharge signals (223A, 223B) respectively for the at least two types of the storage batteries (110A, 110B),

wherein the storage battery system (1100) further comprises:

an external power supply control command generator (146) that is configured to output a power request signal (223C, 223D) for controlling the external power supply (147A) to the external power supply controller (147B), on the basis of a state of charge of each of the at least two types of storage batteries (110A, 110B); and for each of the at least two types of storage batteries (110A, 110B), a computing unit (153A, 153B) that is configured to add one of the second plurality of charge and/or discharge signals (223A, 223B) for the storage battery to one of the first plurality of charge and/or discharge signals (211A, 211B) for the storage battery.

8. The power stabilization system according to claim 7,
wherein the storage battery system (1100) further comprises, for each of the at least two types of storage batteries (110A, 110B):

a storage battery power detector (144A, 144B) that is configured to detect an amount of discharged power of the storage battery; and
an SOC computing unit (145A, 145B) that is configured to compute a state of charge of the storage battery and output the computed state of charge to the external power supply control command generator (146).

9. A method for controlling a storage battery system (100) connected to a power system (101) and carrying out charging and discharging operations on a plurality of storage batteries (110A, 110B) so as to inhibit variations in the power of the power system, the method **characterized in** comprising steps of:

detecting a current and a voltage of the power system;
generating an initial charge or discharge signal (201) based on which charging or discharging of the plurality of storage batteries (110A, 110B) is to be performed, on the basis of the detected current and voltage;
dividing the initial charge or discharge signal (201) into a plurality of charge and/or discharge signals (211A, 211B) transmitted respectively for the plurality of storage batteries (110A, 110B);
determining whether polarities of the plurality of charge and/or discharge signals (211A, 211B) match;
processing the plurality of charge and/or discharge signals (211A, 211B) by setting at least one of the plurality of charge and/or discharge signals (211A, 211B) to zero when the polarities of the plurality of charge and/or discharge signals (211A, 211B) are determined as not matching; and
charging or discharging the plurality of storage batteries (110A, 110B) on the basis of the plurality of charge and/or discharge signals (221A, 221B) resulted from the processing,
wherein the distribution means (115) divides the initial charge or discharge signal (201) using a filter (116) having a variable time constant.

10. The method according to claim 9,
wherein the step of dividing the initial charge or discharge signal comprising extracting a low-frequency component (211B) of the initial charge or discharge signal (201).

**Patentansprüche**

1. Speicherbatteriesystem (100), das mit einem Leistungssystem (101) verbunden ist und Folgendes umfasst:

Leistungsumsetzvorrichtungen (108A, 108B);
ein Steuersystem (107), das konfiguriert ist, die Leistungsumsetzvorrichtungen (108A, 108B) zu steuern;
mindestens zwei Typen von Speicherbatterien (110A, 110B), die mittels der Leistungsumsetzvorrichtungen (108A, 108B) geladen bzw. entladen werden sollen; und
Verteilungsmittel (103A), die konfiguriert sind, ein ursprüngliches Lade- oder Entladesignal (201) vom Leistungssystem (101) zu empfangen, und das ursprüngliche Lade- oder Entladesignal (201) in mehrere Lade- und/oder Entladesignale (211A, 211B), die jeweils für die mindestens zwei Typen der Speicherbatterien (110A, 110B) gesendet werden, unterteilen;

ferner **gekennzeichnet durch**

eine Polaritätsbestimmungseinheit, die konfiguriert ist, zu bestimmen, ob Polaritäten der mehreren Lade- und/oder Entladesignale (211A, 211B) übereinstimmen; und

Umverteilungsmittel (105), die konfiguriert sind, mindestens eines der mehreren Lade- und/oder Entladesignale (211A, 211B) auf null zu setzen, wenn die Polaritätsbestimmungseinheit die Polaritäten der mehreren Lade- und/oder Entladesignale (211A, 211B) als nicht übereinstimmend bestimmt, wobei

das Verteilungsmittel (115) konfiguriert ist, das ursprüngliche Lade- oder Entladesignal (201) unter Verwendung eines Filters (116), das eine veränderbare Zeitkonstante besitzt, zu unterteilen, wobei das Filter (116) Teil des Verteilungsmittels (115) ist.

2. Speicherbatteriesystem (100) nach Anspruch 1, wobei

das Verteilungsmittel (103A) ein Tiefpassfilter (104), das konfiguriert ist, eine niederfrequente Komponente aus dem ursprünglichen Lade- oder Entladesignal zu extrahieren, ein Hochpassfilter (112), das konfiguriert ist, eine Hochfrequenzkomponente aus dem ursprünglichen Lade- oder Entladesignal zu extrahieren, oder ein Gleitdurchschnittsfilter (113), das konfiguriert ist, eine niederfrequente Komponente aus dem ursprünglichen Lade- oder Entladesignal zu extrahieren, umfasst.

3. Speicherbatteriesystem (1100) nach Anspruch 1, wobei

die mehreren Lade- und/oder Entladesignale mehrere erste Lade- und/oder Entladesignale sind, das Speicherbatteriesystem (1100) für jeden der mindestens zwei Typen von Speicherbatterien (110A, 110B) ferner Folgendes umfasst:

eine Speicherbatterie-Energiedetektionseinheit (144A, 144B), die konfiguriert ist, eine Menge entladener Energie der Speicherbatterie zu berechnen; und
eine SOC-Recheneinheit (145A, 145B), die konfiguriert ist, einen Ladezustand der Speicherbatterie zu berechnen,

das Speicherbatteriesystem (1100) konfiguriert ist, den Ladezustand jedes der mindestens zwei Typen von Speicherbatterien (110A, 110B) zu externen Energieversorgungssteuermitteln (147B), die mit dem Leistungssystem (101) verbunden sind, zu senden,
das Speicherbatteriesystem (1100) konfiguriert ist, von den externen Energieversorgungssteuermitteln (147B) mehrere zweite Lade- und/oder Entladesignale (223A, 223B), die jeweils für die mindestens zwei Typen von Speicherbatterien (110A, 110B) durch die externen Energieversorgungssteuermittel (147B) erzeugt werden, zu empfangen, und
das Speicherbatteriesystem (1100) konfiguriert ist, für jeden der mindestens zwei Typen von Speicherbatterien (110A, 110B) eines der mehreren zweiten Lade- und/oder Entladesignale (223A, 223B) für die Speicherbatterie zu einem der mehreren ersten Lade- und/oder Entladesignale (211A, 211B) für die Speicherbatterie hinzuzufügen.

4. Speicherbatteriesystem (2100) nach Anspruch 1, wobei

das Speicherbatteriesystem (2100) für jeden der mindestens zwei Typen von Speicherbatterien (110A, 110B) ferner Folgendes umfasst:

eine Speicherbatterie-Energiedetektionseinheit (144A, 144B), die konfiguriert ist, eine Menge entladener Energie der Speicherbatterie zu berechnen; und
eine SOC-Recheneinheit (148A, 148B), die konfiguriert ist, einen Ladezustand der Speicherbatterie zu berechnen, wobei

das Speicherbatteriesystem (2100) ferner einen Zeitkonstantenanweisungsgenerator (149) umfasst, der konfiguriert ist, einen Wert der veränderbaren Zeitkonstante auf der Grundlage des Ladezustands oder einer Zyklusanzahl jedes der mindestens zwei Typen von Speicherbatterien zu bestimmen.

5. Speicherbatteriesystem (100) nach Anspruch 1, wobei

mindestens einer der mindestens zwei Typen der Speicherbatterien (110A, 110B) eine zusammengesetzte Batterie ist, die durch mehrere einzelne Batterien gebildet ist.

6. Leistungsstabilisierungssystem, das mit einem Leistungssystem (101) verbunden ist und Lade- und Entladeoperationen ausführt, wobei das Leistungsstabilisierungssystem Folgendes umfasst:

   ein Speicherbatteriesystem (100) nach Anspruch 1;
   einen Strom- und Spannungsdetektor (106), der konfiguriert ist, den Strom und die Spannung des Leistungssystems (101) zu detektieren; und
   eine Energieberechnungseinheit (141), die konfiguriert ist, das ursprüngliche Lade- oder Entladesignal (201), das eine Energie darstellt, die in das Speicherbatteriesystem (100) geladen oder aus ihm entladen werden soll, auf der Grundlage des Stroms und der Spannung, die durch den Strom- und Spannungsdetektor (106) detektiert werden, zu berechnen.

7. Leistungsstabilisierungssystem nach Anspruch 6, wobei

   die mehreren Lade- und/oder Entladesignale (211A, 211B) mehrere erste Ladeund/oder Entladesignale sind, wobei
   das Leistungsstabilisierungssystem ferner Folgendes umfasst:

   eine externe Energieversorgung (147A), die konfiguriert ist, das Leistungssystem (101) mit Energie zu versorgen; und
   eine Steuereinheit (147B) für externe Energieversorgungen, die konfiguriert ist, die externe Energieversorgung (147A) zu steuern und mehrere zweite Lade- und/oder Entladesignale (223A, 223B) jeweils für die mindestens zwei Typen der Speicherbatterien (110A, 110B) auszugeben, wobei

   das Speicherbatteriesystem (1100) ferner Folgendes umfasst:

   einen Steueranweisungsgenerator (146) für externe Energieversorgungen, der konfiguriert ist, ein Energieanforderungssignal (223C, 223D) zum Steuern der externen Energieversorgung (147A) auf der Grundlage eines Ladezustands jedes der mindestens zwei Typen von Speicherbatterien (110A, 110B) zur Steuereinheit (147B) für externe Energieversorgungen auszugeben; und
   für jeden der mindestens zwei Typen von Speicherbatterien (110A, 110B) eine Recheneinheit (153A, 153B), die konfiguriert ist, eines der mehreren zweiten Lade- und/oder Entladesignale (223A, 223B) für die Speicherbatterie zu einem der mehreren ersten Lade- und/oder Entladesignale (211A, 211B) für die Speicherbatterie hinzuzufügen.

8. Leistungsstabilisierungssystem nach Anspruch 7, wobei
   das Speicherbatteriesystem (1100) für jeden der mindestens zwei Typen von Speicherbatterien (110A, 110B) ferner Folgendes umfasst:

   einen Speicherbatterieenergiedetektor (144A, 144B), der konfiguriert ist, eine Menge entladener Energie der Speicherbatterie zu detektieren; und
   eine SOC-Recheneinheit (145A, 145B), die konfiguriert ist, einen Ladezustand der Speicherbatterie zu berechnen und den berechneten Ladezustand zum externen Energieversorgungs-Steueranweisungsgenerator (146) auszugeben.

9. Verfahren zum Steuern eines Speicherbatteriesystems (100), das mit einem Leistungssystem (101) verbunden ist und Lade- und Entladeoperationen an mehreren Speicherbatterien (110A, 110B) ausführt, um Schwankungen der Leistung des Leistungssystems niederzuhalten, wobei das Verfahren **gekennzeichnet ist durch**

   Detektieren eines Stroms und einer Spannung des Leistungssystems;
   Erzeugen auf der Grundlage des detektierten Stroms und der detektierten Spannung eines ursprünglichen Lade- oder Entladesignals (201), auf dessen Grundlage das Laden oder Entladen der mehreren Speicherbatterien (110A, 110B) durchgeführt werden soll;
   Unterteilen des ursprünglichen Lade- oder Entladesignals (201) in mehrere Lade- und/oder Entladesignale (211A, 211B), die jeweils für die mehreren Speicherbatterien (110A, 110B) gesendet werden;
   Bestimmen, ob Polaritäten der mehreren Lade- und/oder Entladesignale (211A, 211B) übereinstimmen;

Verarbeiten der mehreren Lade- und/oder Entladesignale (211A, 211B) durch Setzen mindestens eines der mehreren Lade- und/oder Entladesignale (211A, 211B) zu null, wenn die Polaritäten der mehreren Lade-und/oder Entladesignale (211A, 211B) als nicht übereinstimmend bestimmt werden; und

Laden oder Entladen der mehreren Speicherbatterien (110A, 110B) auf der Grundlage der mehreren Lade-und/oder Entladesignale (221A, 221B), die aus der Verarbeitung resultieren, wobei

das Verteilungsmittel (115) das ursprüngliche Lade- oder Entladesignal (201) unter Verwendung eines Filters (116), das eine veränderbare Zeitkonstante besitzt, unterteilt.

**10.** Verfahren nach Anspruch 9, wobei

der Schritt des Unterteilens des ursprünglichen Lade- oder Entladesignals ein Extrahieren einer niederfrequenten Komponente (211B) des ursprünglichen Lade- oder Entladesignals (201) umfasst.

**Revendications**

**1.** Système de batterie de stockage (100) connecté à un système de puissance (101), comprenant :

des dispositifs de conversion de puissance (108A, 108B) ;

un système de commande (107) qui est configuré pour commander les dispositifs de conversion de puissance (108A, 108B) ;

au moins deux types de batterie de stockage (110A, 110B) devant être chargées et déchargées respectivement via les dispositifs de conversion de puissance (108A, 108B) ;

un moyen de distribution (103A) qui est configuré pour recevoir un signal de charge ou de décharge initiale (201) provenant du système de puissance (101) et qui divise le signal de charge ou de décharge initiale (201) en une pluralité de signaux de charge et/ou décharge (211A, 211B) transmis respectivement pour lesdits au moins deux types de batterie de stockage (110A, 110B) ;

**caractérisé en ce qu'**il comprend en outre :

une unité de détermination de polarité qui est configurée pour déterminer si des polarités de la pluralité de signaux de charge et/ou décharge (211A, 211B) sont en correspondance ; et

un moyen de redistribution (105) qui est configuré pour fixer au moins un signal parmi la pluralité de signaux de charge et/ou décharge (211A, 211B) à zéro quand l'unité de détermination de polarité détermine les polarités de la pluralité de signaux de charge et/ou décharge (211A, 211B) comme n'étant pas en correspondance,

dans lequel le moyen de distribution (115) est configuré pour diviser les signaux de charge ou de décharge initiale (201) en utilisant un filtre (116) ayant une constante de temps variable, dans lequel le filtre (116) est une partie du moyen de distribution (115).

**2.** Système de batterie de stockage (100) selon la revendication 1,

dans lequel le moyen de distribution (103A) comprend un filtre passebas (104) qui est configuré pour extraire une composante à basse fréquence à partir du signal de charge ou de décharge initiale, un filtre passe-haut (112) qui est configuré pour extraire une composante à haute fréquence à partir du signal de charge ou de décharge initiale, ou un filtre à moyenne mobile (113) qui est configuré pour extraire une composante à basse fréquence à partir du signal de charge ou décharge initiale.

**3.** Système de batterie de stockage (1100) selon la revendication 1,

dans lequel la pluralité de signaux de charge et/ou décharge sont une première pluralité de signaux de charge et/ou décharge,

dans lequel le système de batterie de stockage (1100) comprend en outre, pour chacun desdits au moins deux types de batterie de stockage (110A, 110B) :

une unité de détection de puissance de batterie de stockage (144A, 144B) qui est configurée pour calculer une quantité de puissance déchargée de la batterie de stockage ; et

une unité de calcul de SOC (145A, 145B) qui est configurée pour calculer un état de charge de la batterie de stockage,

dans lequel le système de batterie de stockage (1100) est configuré pour transmettre l'état de charge de chacun desdits au moins deux types de batterie de stockage (110A, 110B) à un moyen de commande d'alimentation en puissance externe (147B) connecté au système de puissance (101),

le système de batterie de stockage (1100) est configuré pour recevoir, depuis le moyen de commande d'alimentation en puissance externe (147B), une seconde pluralité de signaux de charge et/ou décharge (223A, 223B) générés respectivement pour lesdits au moins deux types de batterie de stockage (110A, 110B) via le moyen de commande d'alimentation en puissance externe (147B), et

le système de batterie de stockage (1100) est configuré pour ajouter, pour chacun desdits au moins deux types de batterie de stockage (110A, 110B), un signal parmi la seconde pluralité de signaux de charge et/ou décharge (223A, 223B) pour la batterie de stockage à un signal parmi la première pluralité de signaux de charge et/ou décharge (211A, 211B) pour la batterie de stockage.

4. Système de batterie de stockage (2100) selon la revendication 1,

dans lequel le système de batterie de stockage (2100) comprend en outre, pour chacun desdits au moins deux types de batterie de stockage (110A, 110B) :

une unité de détection de puissance de batterie de stockage (144A, 144B) qui est configurée pour calculer une quantité de puissance déchargée de la batterie de stockage ; et
une unité de calcul de SOC (148A, 148B) qui est configurée pour calculer un état de charge de la batterie de stockage,

dans lequel le système de batterie de stockage (2100) comprend en outre un générateur d'ordre de constante de temps (149) qui est configuré pour déterminer une valeur de la constante de temps variable sur la base de l'état de charge ou d'un nombre de cycles de chacun desdits au moins deux types de batterie de stockage.

5. Système de batterie de stockage (100) selon la revendication 1,
dans lequel l'un au moins desdits au moins deux types de batterie de stockage (110A, 110B) est une batterie assemblée constituée d'une pluralité de batteries uniques.

6. Système de stabilisation de puissance connecté à un système de puissance (101) et exécutant des opérations de charge et de décharge, le système de stabilisation de puissance comprenant :

un système de batterie de stockage (100) selon la revendication 1;
un détecteur de courant et de tension (106) qui est configuré pour détecter le courant et la tension du système de puissance (101) ; et
une unité de calcul de puissance (141) qui est configurée pour calculer le signal de charge ou de décharge initiale (201) représentant une puissance qu'il s'agit de charger/décharger dans/depuis le système de batterie de stockage (100) sur la base du courant et de la tension détectés par le détecteur de courant et de tension (106).

7. Système de stabilisation de puissance selon la revendication 6,

dans lequel la pluralité de signaux de charge et/ou décharge (211A, 211B) sont une première pluralité de signaux de charge et/ou décharge,
dans lequel le système de stabilisation de puissance comprend en outre :

une alimentation en puissance externe (147A) qui est configurée pour alimenter le système de puissance (101) en puissance externe ; et
un contrôleur d'alimentation en puissance externe (147B) qui est configuré pour commander l'alimentation en puissance externe (147A) et pour sortir une seconde pluralité de signaux de charge et/ou décharge (223A, 223B) respectivement pour lesdits au moins deux types de batterie de stockage (110A, 110B),

dans lequel le système de batterie de stockage (1100) comprend en outre :

un générateur d'ordre de commande d'alimentation en puissance externe (146) qui est configuré pour sortir un signal de requête de puissance (223C, 223D) destiné à commander l'alimentation en puissance externe (147A) vers le contrôleur d'alimentation en puissance externe (147B), sur la base d'un état de charge de chacun desdits au moins deux types de batterie de stockage (110A, 110B) ; et
pour chacun desdits au moins deux types de batterie de stockage (110A, 110B), une unité de calcul (153A, 153B) qui est configurée pour ajouter un signal parmi la seconde pluralité de signaux de charge et/ou décharge (223A, 223B) pour la batterie de stockage à un signal parmi la première pluralité de signaux de charge et/ou décharge (211A, 211B) pour la batterie de stockage.

8. Système de stabilisation de puissance selon la revendication 7,
dans lequel le système de batterie de stockage (1100) comprend en outre, pour chacun desdits au moins deux types de batterie de stockage (110A, 110B) :

un détecteur de puissance de batterie de stockage (144A, 144B) qui est configuré pour détecter une quantité de puissance déchargée de la batterie de stockage ; et
une unité de calcul de SOC (145A, 145B) qui est configurée pour calculer un état de charge de la batterie de stockage et pour sortir l'état de charge calculé vers le générateur d'ordre de commande d'alimentation en puissance externe (146).

9. Procédé pour commander un système de batterie de stockage (100) connecté à un système de puissance (101) et exécuter des opérations de charge et de décharge sur une pluralité de batterie de stockage (110A, 110B) de manière à empêcher des variations dans la puissance du système de puissance, le procédé étant **caractérisé en ce qu'**il comprend les étapes consistant à :

détecter un courant et une tension du système de puissance ;
générer un signal de charge ou de décharge initiale (201) sur la base duquel une charge ou une décharge de la pluralité de batteries de stockage (110A, 110B) doit être exécutée, sur la base du courant et de la tension détectés ;
diviser le signal de charge ou de décharge initiale (201) en une pluralité de signaux de charge et/ou décharge (211A, 211B) transmis respectivement pour la pluralité de batteries de stockage (110A, 110B) ;
déterminer si des polarités de la pluralité de signaux de charge et/ou décharge (211A, 211B) sont en correspondance ;
traiter la pluralité de signaux de charge et/ou décharge (211A, 211B) en fixant au moins un signal parmi la pluralité de signaux de charge et/ou décharge (211A, 211B) à zéro quand les polarités de la pluralité de signaux de charge et/ou décharge (211A, 211B) sont déterminées comme n'étant pas en correspondance ; et
charger ou décharger la pluralité de batteries de stockage (110A, 110B) sur la base de la pluralité de signaux de charge et/ou décharge (221A, 221B) résultant du traitement,
dans lequel le moyen de distribution (115) divise le signal de charge ou de décharge initiale (201) en utilisant un filtre (116) ayant une constante temporelle variable.

10. Procédé selon la revendication 9,
dans lequel l'étape consistant à diviser le signal de charge ou de décharge initiale comprend d'extraire une composante à basse fréquence (211B) du signal de charge ou de décharge initiale (201).

# FIG. 1

FIG. 2

211B

221B

221A

142D

139

142C

202 203

142B

140

201

142A

211A

105

>0

FIG. 3

FIG. 4

# FIG. 5

# FIG. 6

EP 3 399 619 B1

## FIG. 7

FIG. 8

# FIG.9

EP 3 399 619 B1

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016059134 A
- US 2008224541 A1

- WO 2015198630 A1